**Europäisches Patentamt**

(19) **European Patent Office**

**Office européen des brevets**

(11) Veröffentlichungsnummer: **0 206 134**
**B1**

(12) **EUROPÄISCHE PATENTSCHRIFT**

(45) Veröffentlichungstag der Patentschrift:
**18.10.89**

(51) Int. Cl.⁴: **B29B 15/12**, B29C 67/14

(21) Anmeldenummer: **86107995.2**

(22) Anmeldetag: **11.06.86**

(54) Verfahren und Vorrichtung zur kontinuierlichen Herstellung von Halbzeug aus faserverstärkten Kunststoffen.

(30) Priorität: **13.06.85 DE 3521228**

(43) Veröffentlichungstag der Anmeldung:
**30.12.86 Patentblatt 86/52**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**EP-A- 0 140 532**
**DE-A- 1 577 867**
**DE-A- 3 541 005**
**FR-A- 1 435 755**
**FR-A- 2 435 432**
**FR-A- 2 516 441**
**GB-A- 113 816**
**US-A- 3 235 437**
**US-A- 3 737 261**
**US-A- 3 874 329**

(73) Patentinhaber: **BASF Aktiengesellschaft,
Carl-Bosch-Strasse 38, D-6700 Ludwigshafen(DE)**

(72) Erfinder: **Gehrig, Heinz, Dr., Spinozastrasse 30,
D-6750 Kaiserslautern(DE)**

ACTORUM AG

## Beschreibung

Die Erfindung bezieht sich auf ein Verfahren nach dem Oberbegriff des Anspruchs 1 sowie auf eine Vorrichtung nach dem Oberbegriff des Anspruchs 2.

Es ist bekannt, hartbare Stoffe, z. B. ungesättigte Polyester-, Melamin-, Phenolharze und dergleichen, mit Fasern in verschiedenster Form zu kombinieren. Dabei werden im allgemeinen die in Frage kommenden Fasermaterialien mit den Vorkondensaten solcher Produkte in einem Tränkbad imprägniert, was aufgrund der geringen Viskosität derartiger Einstellungen ohne größere Schwierigkeiten möglich ist. Der Nachteil der Kombination von Fasern mit härtbaren Stoffen besteht darin, daß einerseits eine relativ lange Tränkzeit erforderlich ist und andererseits die Dosiergenauigkeit der härtbaren Stoffe häufig unzureichend ist, da diese zum Teil wieder aus dem Fasermaterial herausgedrückt werden, wenn das Fasermaterial über Walzen geführt wird.

Auch die Kombination von Fasern mit Thermoplasten ist bekannt. Dabei handelt es sich jedoch meist nicht um eine Imprägnierung, sondern lediglich um eine Oberflächenbeschichtung von Geweben, Vliesen und dergleichen. Vor allem soll der textile Charakter, also die textile Geschmeidigkeit derartiger Halbzeuge erhalten bleiben. In Ausnahmefällen wird auch imprägniert, z. B. mit Pasten, Lösungen oder Dispersionen. Bei diesen Verfahren ist es jedoch immer notwendig, Lösungsmittel- oder – bei Kunststoffdispersionen – Wasser zu entfernen. Das bringt mit sich, daß durch den aufwendigen Trockenprozeß eine Anreicherung des Kunststoffes in der Oberfläche der Halbzeuge entsteht. Die Imprägnierung ist nicht homogen. Lufteinschlüsse in den Halbzeugen sind, wenn überhaupt, nur mit hohem Aufwand zu verhindern.

Weiterhin beschreibt die EP-A-O 140 532 das Imprägnieren von Fäden zur Herstellung von Borten, wobei die Fäden durch eine Vorrichtung geführt werden, die ein flüssiges, unter Druck stehendes Harz enthält. Die Vorrichtung besteht aus einer Tränkkammer, welche aus zwei winkelförmigen Führungsringen gebildet ist, die konzentrisch um einen Dorn angeordnet sind und mehrere Poren aufweisen. Jedem Führungsring ist eine Kammer für das Harz zugeordnet. Das in einem Kreislauf umgewälzte Harz wird durch die Poren gedrückt und von den Fäden aufgenommen. Der Flüssigkeitsdruck ist dabei nur so groß, daß an jeder Pore ein Harztropfen entsteht; er reicht nicht aus, um Harz aus den gefüllten Kammern austreten zu lassen, d.h. es werden keine Flüssigkeitsstrahlen gebildet, die in erzwungener Strömung auf das Fasermaterial auftreffen. Dadurch wird das Fasermaterial lediglich oberflächlich benetzt.

Wichtig bei der Herstellung hochfester faserverstärkter Halbzeuge ist eine vollständige Benetzung aller Faserelemente mit Kunststoff. Darüber hinaus dürfen die Faserelemente nicht brechen und es soll ein Minimum an Kunststoff im Halbzeug verbleiben, um den Abstand zwischen benachbarten Fasern möglichst klein zu halten. Die bekannten Verfahren konnten diese Bedingungen nicht vollständig erfüllen.

Es war daher Aufgabe der Erfindung ein einfaches und rasch durchzuführendes Verfahren zur kontinuierlichen Herstellung von Halbzeug aus faserverstärkten Kunststoffen zu schaffen, bei dem eine sehr gleichmäßige Verteilung des Kunststoffs, auch bei höheren Viskositäten im Fasermaterial erreicht wird und ein als optimal erkanntes Mengenverhältnis Fasermaterial/Kunststoff während nachfolgender Verfahrensschritte beibehalten wird.

Zur Lösung dieser Aufgabe werden die Maßnahmen nach dem Kennzeichen des Anspruchs 1 vorgeschlagen.

Nach dem erfindungsgemäßen Verfahren ist es möglich, durch eine einfache Arbeitsweise, bei der nur Tränkkammer und Kalibrierdüse ausgetauscht werden, Fasermaterial in praktisch jeder gewünschten Gestalt sowohl mit durch Strahlung oder Peroxiden härtbaren Kunststoffen als auch mit thermoplastischem Kunststoff zu durchtränken.

Als durch Strahlung oder Peroxide härtbare Kunststoffe können alle Kunstharze verwendet werden, die durch freie Radikale vernetzt werden können, wie z.B. ungesättigte Polyesterharze, ungesättigte und gesättigte Acrylharze, modifizierte Epoxyharze, modifizierte Polyurethanharze oder Mischungen dieser Harze. Außerdem können mit Erfolg auch Gemische dieser Harze mit damit mischpolymerisierbaren ungesättigten Monomeren verwendet werden.

Geeignete thermoplastische Kunststoffe sind beispielsweise Olefinpolymerisate, wie Polyethylen oder Polypropylen; Styrolpolymerisate, wie Polystyrol oder Copolymere des Styrols mit bis zu 50 Gew.-% Acrylnitril, α-Methyl-styrol, Maleinsäureanhydrid, Methylmethacrylat, sowie kautschukmodifizierte Styrolpolymerisate, vorzugsweise solche, die 2 bis 25 Gew.-% eines Butadienkautschuks enthalten; Chlor enthaltende Polymerisate, wie Polyvinylchlorid, Polyvinylidenchlorid oder chlorierte Polyolefine; Polyamide, Polymethylmethacrylat, Polyester aus Terephthalsäure und gesättigten Diolen, Polycarbonat sowie Mischungen dieser Polymerisate.

Diese Kunststoffe können die üblichen Zusatzstoffe, wie Füllstoffe, Pigmente, Farbstoffe, Antistatika, Stabilisatoren, Flammschutzmittel oder Gleitmittel enthalten. Ihre Viskosität beträgt im allgemeinen 1 bis 100 Pa.s.

Als Fasermaterialien kommen strang- oder bandförmige Gebilde aus natürlichen und synthetischen organischen Fasern, wie z.B. Aramid, Polyamid-, Polyester-, Polyacrylnitril-, Polyvinylchlorid-, Polyvinylalkohol-, Baumwoll-, Hanffasern und dergleichen sowie aus anorganischen Fasern, z.B. Glasfasern, Kohlenstoffasern usw. in Betracht. Unter diesen sind Glasfasern, Kohlenstoffasern, Polyesterfasern und Polyvinylalkoholfasern besonders bevorzugt. Diese Fasern können bei ihrer Verwendung in Form eines Garns, eines Vorgespinstes, in Form von gebundenen Stapelfasern oder in Form eines Gewebes, Gewirkes oder Vlies vorliegen. Für einen besseren Zusammenhalt der Fasern sind diese üblicherweise mit Bindern auf Kunststoffbasis beschichtet. Glasfasern sind mit üblichen Schlichten behandelt, die z.B. einen Haftvermittler auf Silan- oder Chrombasis enthalten.

Im allgemeinen wird das Fasermaterial von Vorratsrollen abgenommen und durch eine Tränkzone geführt. Der in pumpfähiger Konsistenz vorliegende Kunststoff wird in einem Kreislauf umgewälzt, wobei dieser Kreislauf die Tränkzone einschließt. Das Rückführverhältnis, definiert als Rückflußmenge zu Fördermenge, kann zwischen 0,01 und 0,9 liegen, vorzugsweise zwischen 0,1 und 0,5. Das wesentliche Merkmal der Erfindung liegt darin, daß der flüssige Kunststoff auf Drücke von etwa 0,1 bis etwa 10 bar gebracht wird, der dann in Geschwindigkeit umgesetzt wird, wobei der Kunststoff in mehreren Teilströmen in die Tränkstrecke eingeleitet wird und dort im wesentlichen senkrecht auf das zu imprägnierende Fasermaterial aufgegeben wird. Nach dem Auftreffen des Kunststoffes auf das Fasermaterial strömt er eine Wegstrecke parallel in dessen Laufrichtung – Gleichstromfahrweise vorausgesetzt – und "schiebt" es zumindest zum Teil aus der Tränkstrecke heraus. Dadurch ergeben sich nur extrem kleine Abzugskräfte, womit ein zu enges Aneinanderrücken der Monofilamente und damit mangelhafte Entlüftung und unzureichende Kunststoffaufnahme vermieden werden. Bei Viskositäten von etwa 5 bis 10 Pa·s und ca. 50 m/min Durchlaufgeschwindigkeit liegen nur etwa $10^{-3}$ N/tex Abzugsspannung vor. Die Geschwindigkeit, mit der das getränkte Fasermaterial durch die Tränkzone gefördert wird beträgt, je nach Größe der übrigen Parameterwerte bis zu 2 m/s.

Im Anschluß an die Tränkzone wird das durchtränkte Fasermaterial in einer entsprechenden Einrichtung kalibriert. Diese ist so gestaltet, daß sich beim Durchlauf des imprägnierten Verstärkungsmaterials vor einer düsenartigen Verengung ein Druck aufbaut, der zur Sicherstellung optimaler Tränkung und Entlüftung dient und den Überschußkunststoff aus der Einlauföffnung oder einem seitlich an der Kalibriervorrichtung angebrachten Ablaufstutzen herausschiebt. Die Querschnittsabmessungen des getränkten Fasermaterials sind vom Querschnitt der Kalibriervorrichtung abhängig sowie von der Art des verwendeten Verstärkungsmaterials und des Kunststoffes.

Das getränkte Fasermaterial kann entweder gleich weiterverarbeitet oder als Halbzeug aufgerollt und gelagert werden. Die Weiterverarbeitung erfolgt nach an sich bekannten Verfahren. Aus den erfindungsgemäß getränkten Verstärkungsmaterialien lassen sich insbesondere hochfeste Fertigteile, wie Druckbehälter, Antriebs- und Kurbelwellen, Pleuel, Federn und andere Maschinenelemente herstellen.

Die Erfindung erstreckt sich auch auf eine Vorrichtung zur Durchführung des Verfahrens. Diese Vorrichtung besteht aus einem Vorratsbehälter für den flüssigen Kunststoff und einer Tränkkammer, mit Düsen und Überströmkanälen, wobei die Tränkkammer Nebenkammern aufweist, die über eine Pumpe enthaltende Zuführleitung und eine Rückführleitung mit dem Vorratsbehälter verbunden sind. Diese Vorrichtung weist zudem die kennzeichnenden Merkmale des Anspruchs 2 auf. Die Tränkkammer weist mehrere Düsen und Überströmkanäle auf, die jeweils im Bereich einer Nebenkammer angebracht sind, von denen die eine Nebenkammer an die Zuführleitung und die andere Nebenkammer an die Rückführleitung anschließt. Auf diese Weise kann der flüssige Kunststoff zur Erhöhung des Impulses der Strömung im Überschuß in die Tränkkammer gefördert werden. Für das Durchtränken des Fasermaterials nicht benötigter Kunststoff wird zum Vorratsbehälter zurückgeführt.

In vorteilhafter Weise kann die Vorrichtung so ausgestaltet sein wie in den Ansprüchen 3 bis 5 angegeben. Insbesondere wenn die Ausbildung so erfolgt, wie in den Ansprüchen 3 und 4 angegeben, ist eine sehr rasche Durchtränkung des Fasermaterials sichergestellt. Durch die zwischen den Nebenkammern zur Förderrichtung des Fasermaterials parallel verlaufende Strömung des Kunststoffes wirken Vorschubkräfte auf das Fasermaterial, so daß die für den Transport des getränkten Fasermaterials erforderliche Abzugskraft sehr klein gehalten werden kann.

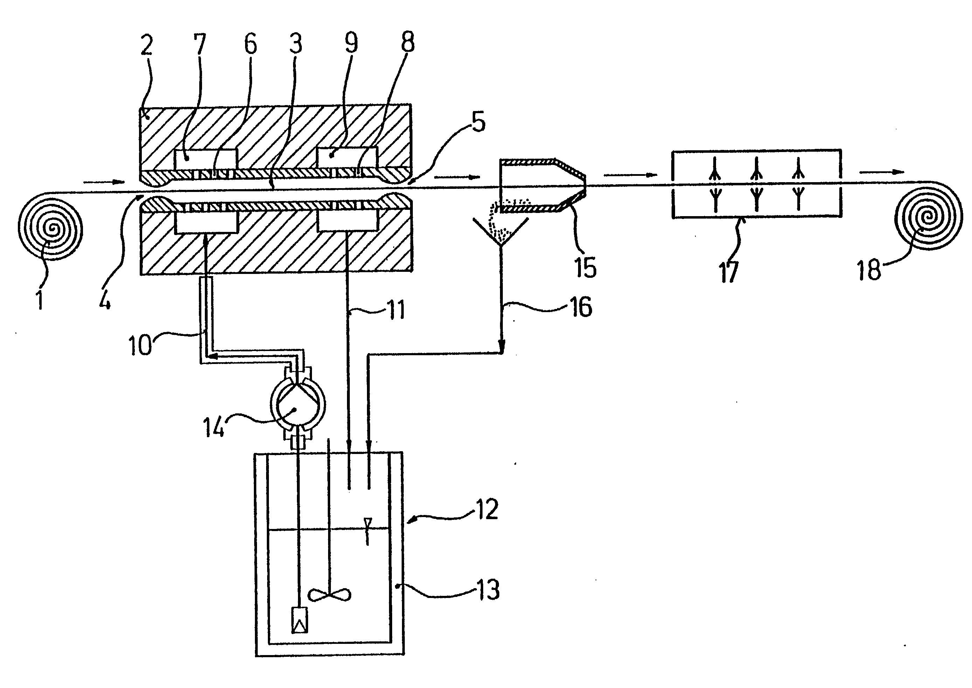

Die Erfindung wird nachfolgend unter Hinweis auf die Zeichnung anhand eines Ausführungsbeispiels näher erläutert.

Im wesentlichen besteht die Vorrichtung aus einem Gehäuse (2), in dem eine kanalförmige Tränkkammer (3) ausgebildet ist, deren stirnseitige Öffnungen (4) und (5) dem Querschnitt des Fasermaterials zumindest näherungsweise angepaßt sind. Das Fasermaterial wird von einer Vorratsrolle (1) abgezogen. In die Tränkkammer (3) führen mehrere, diametral gegenüberliegende und gegeneinander versetzte Düsen (6). Sämtliche Düsen sind im Bereich einer Nebenkammer (7) angebracht, welche über eine Zuführleitung (10) mit dem Vorratsbehälter (12) in Verbindung steht. Mit (9) ist eine weitere Nebenkammer bezeichnet, die mehrere Überströmkanäle (8) aufweist und durch eine Rückführleitung (11) ebenfalls mit dem Vorratsbehälter (12) verbunden ist.

Der Vorratsbehälter (12) für den flüssigen Kunststoff ist im allgemeinen mit einem Heizmantel (13) versehen. Ein Rührorgan ist angedeutet. Mit Hilfe einer Pumpe (14) wird der Kunststoff durch die Zuführleitung (10) unter Druck in die Nebenkammer (7) gefördert, aus der er dann in Form von Strahlen mit hoher Geschwindigkeit und entsprechendem Impuls auf das Fasermaterial in der Tränkkammer (3) auftrifft. Hierdurch wird das Fasermaterial aufgebrochen und durchtränkt. Die Strömungsrichtung des Kunststoffes und Förderrichtung des Fasermaterials sind gleich. Eine der Förderrichtung des Fasermaterials gegenläufige Strömungsrichtung des Kunststoffes ist denkbar.

Das mit Kunststoff getränkte Fasermaterial wird nach dem Verlassen der Tränkkammer (3) kalibriert. Beim Durchlauf durch eine solche Kalibriereinrichtung (15) werden Kunststoff und Fasermaterial in eine gewünschte Querschnittskonfiguration gebracht, und überschüssiger Kunststoff wird abgestreift.

Im Anschluß an die Kalibriereinrichtung (15) ist eine Heiz- bzw. Kühleinrichtung (17) vorgesehen, in der der Kunststoff durch Strahlungswärme verfestigt oder durch Kühlung in festen Zustand überführt wird. Dabei entsteht ein Halbzeug, welches unmittelbar anschließend einer Weiterverarbeitung zugeführt oder auf einer Rolle (18) aufgewickelt werden kann.

## Patentansprüche

1. Verfahren zur kontinuierlichen Herstellung von Halbzeug aus faserverstärkten Kunststoffen, bei dem Fasermaterial in gebundener Form mit flüssigem, in einem Kreislauf umgewälzten und in mehrere Teilströme aufgeteilten Kunststoff durchtränkt und das getränkte Fasermaterial kalibriert wird, dadurch gekennzeichnet, daß die Teilströme unter einem Druck von etwa 0,1 bis etwa 10 bar in eine Tränkzone injiziert werden, wobei die Strahlen des in die Tränkzone eintretenden Kunststoffes im wesentlichen senkrecht auf das durch die Tränkzone geführte Fasermaterial auftreffen.

2. Vorrichtung zur Durchführung des Verfahrens zur kontinuierlichen Herstellung von Halbzeug aus faserverstärkten Kunststoffen nach Anspruch 1, mit einem Vorratsbehälter (12) für den flüssigen Kunststoff und einer Tränkkammer (3) mit Düsen (6) und Überströmkanälen (8), wobei die Tränkkammer, Nebenkammern aufweist, die über eine Pumpe (14), eine enthaltende Zuführleitung (10) und eine Rückführleitung (11) mit dem Vorratsbehälter verbunden sind, dadurch gekennzeichnet, daß die Tränkkammer zwei Nebenkammern die in Bewegungsrichtung des Fasermaterials hintereinander angeordnet sind, (7, 9) aufweist, von denen die eine Nebenkammer (7) im Bereich der Düsen (6) angebracht ist und an die Zuführleitung (10) und die andere Nebenkammer (9) die Überströmkanäle (8) enthält und an die Rückführleitung (11) anschließt und daß die Düsen so ausgebildet sind, daß der flüssige Kunststoff in Form von Strahlen im wesentlichen senkrecht auf das durch die Tränkkammer geführte Fasermaterial auftrifft.

3. Vorrichtung nach Anspruch 2, dadurch gekennzeichnet, daß die Düsen (6) bzw. Überströmkanäle (8) in gegenüberliegenden Wandbereichen der Tränkkammer (3) angebracht sind.

4. Vorrichtung nach den Ansprüchen 2 und 3, dadurch gekennzeichnet, daß die gegenüberliegenden Düsen (6) in Bewegungsrichtung des Fasermaterials gegeneinander versetzt angeordnet sind.

5. Vorrichtung nach den Ansprüchen 2 bis 4, dadurch gekennzeichnet, daß die Summe der Querschnitte der Überströmkanäle (8) ein Mehrfaches der Querschnitte der Düsen (6) ist und zumindest näherungsweise dem Querschnitt der Tränkkammer (3) entspricht.

## Claims

1. A process for the continuous production of a semifinished product from a fiber-reinforced plastic, in which fiber material in bonded form is impregnated with a liquid, recirculating plastic divided into a plurality of streams and the impregnated fiber material is calibrated, wherein the streams are injected into an impregnation zone under a pressure from about 0.1 to about 10 bar, and the jets of the plastic entering the impregnation zone strike the fiber material, fed through the impregnation zone, essentially at right angles.

2. Apparatus for carrying out the process for the continuous production of a semifinished product from a fiber-reinforced plastic as claimed in claim 1, which comprises a stock vessel (12) for the liquid plastic and an impregnation chamber (3) having nozzles (6) and overflow channels (8), said impregnation chamber possessing side chambers which are connected to the stock vessel via a feed line (10), which contains a pump (14), and a return line (11), wherein the impregnation chamber possesses two side chambers (7, 9) which are arranged behind one another in the direction of movement of the fiber material, one of the side chambers (7) being housed in the region of the nozzles (6) and connecting to the feed line (10) and the other side chamber (9) containing the overflow channels (8) and connecting to the return line (11), and wherein the nozzles are formed in such a way that the liquid plastic in jet form strikes the fiber material, fed through the impregnation chamber, essentially at right angles.

3. Apparatus as claimed in claim 2, wherein the nozzles (6) or overflow channels (8) are housed in opposite wall areas of the impregnation chamber (3).

4. Apparatus as claimed in either of claims 2 and 3, wherein the nozzles (6) which are opposite one another are displaced with respect to one another in the direction of movement of the fiber material.

5. Apparatus as claimed in any of claims 2 to 4, wherein the sum of the cross-sections of the overflow channels (8) is several times the cross-sections of the nozzles (6), and exactly or roughly matches the cross-section of the impregnation chamber (3).

## Revendications

1. Procédé de fabrication en continu de demis-produits en matières plastiques renforcées par des fibres, dans lequel le matériau fibreux, sous forme liée, est imprégné par de la matière plastique liquide, entraînée en circuit fermé et subdivisée en plusieurs courants partiels, et le matériau fibreux imprégné est calibré, caractérisé par le fait que les courants partiels sont injectés dans une zone d'imprégnation sous une pression d'environ 0,1 à environ 10 bar, les filets de la matière plastique entrant dans la zone d'imprégnation frappant sensiblement verticalement le matériau fibreux que l'on fait passer par la zone d'imprégnation.

2. Dispositif pour la mise en œuvre du prodédé destiné à la fabrication en continu de demis-produits en matières plastiques renforcées par des fibres selon la revendication 1, qui comporte un réservoir (12) pour la matière plastique liquide et une chambre d'imprégnation (3) à buses (6) et canaux de trop-plein (8), la chambre d'imprégnation présentant des chambres annexes qui sont reliées avec le réservoir par une conduite d'amenée (10) contenant une pompe (14) et une conduite de retour (11) caractérisé par le fait que la chambre d'imprégnation comporte deux chambres annexes (7, 9) qui sont disposées l'une derrière l'autre, dans le sens de déplacement du matériau fibreux, dont l'une des chambres annexes (7) est disposée dans la zone des buses (6) et sur la conduite d'amenée (10) et l'autre chambre annexe (9) contient les canaux de trop-plein (8) et se raccorde à la conduite de retour (11) et que les buses sont agencées de manière que la matière plastique liquide, sous forme de jets, frappe le matériau fibreux, passant à travers la chambre d'imprégnation, sensiblement verticalement.

3. Dispositif selon la revendication 2, caractérisé par le fait que les buses (6) et les canaux de trop-plein (8) sont ménagés dans des zones de paroi de la chambre d'imprégnation (3) qui se font face.

4. Dispositif selon les revendications 2 ou 3, caractérisé par le fait que les buses (6), qui se font face, sont décalées les unes par rapport aux autres dans la direction de mouvement du matériau fibreux.

5. Dispositif selon les revendications 2 à 4, caractérisé par le fait que la somme des sections des canaux de trop-plein (8) est un multiple de la section des buses (6) et correspond, au moins approximativement, à la section de la chambre d'imprégnation (3).